# EUROPÄISCHE PATENTSCHRIFT

(11) **EP 4 665 995 B1**
(45) Veröffentlichungstag und Bekanntmachung des Hinweises auf die Patenterteilung: **01.07.2026**
(21) Anmeldenummer: 24705133.7
(22) Anmeldetag: 13.02.2024
(51) Int. Cl.: F16L 9/12, G01M 3/16

(54) **KUNSTSTOFFROHR FÜR DEN MEDIENTRANSPORT UNTER INNENDRUCK MIT INTEGRIERTER SENSORIK ZUR FUNKTIONSÜBERWACHUNG UND BESCHÄDIGUNGSDETEKTION UND VERFAHREN ZUR INSTALLATION EINES DERARTIGEN KUNSTSTOFFROHRS**
PLASTIC PIPE FOR MEDIA TRANSPORT UNDER INTERNAL PRESSURE WITH INTEGRATED SENSOR SYSTEM FOR FUNCTION MONITORING AND DAMAGE DETECTION AND METHOD FOR INSTALLING SUCH A PLASTIC PIPE
TUYAU EN PLASTIQUE POUR LE TRANSPORT DE MILIEUX SOUS PRESSION INTERNE AVEC SYSTÈME DE CAPTEUR INTÉGRÉ POUR LA SURVEILLANCE DE FONCTION ET LA DÉTECTION D'ENDOMMAGEMENT ET PROCÉDÉ D'INSTALLATION D'UN TEL TUYAU EN PLASTIQUE

(30) Priorität: 16.02.2023 DE 102023103799
(43) Veröffentlichungstag der Anmeldung: 24.12.2025
(73) Patentinhaber: egeplast international GmbH, 48268 Greven (DE)
(72) Erfinder: STRANZ, Michael, 49078 Osnabrück (DE); RATZMANN, Torsten, 49078 Osnabrück (DE)
(74) Vertreter: Duda, Rafael Thomas
(86) Internationale Anmeldenummer: PCT/EP2024/053626
(87) Internationale Veröffentlichungsnummer: WO 2024/170568

(56) Entgegenhaltungen:
- WO-A1-2014/195756
- DE-A1- 10 044 039
- KR-A- 20030 088 259
- US-A1- 2013 284 303

## Beschreibung

Die vorliegende Erfindung betrifft ein Kunststoffrohr für den Medientransport unter Innendruck mit integrierter Sensorik zur Funktionsüberwachung und Beschädigungsdetektion und ein Verfahren zur Installation eines derartigen Kunststoffrohrs. Das erfindungsgemäße Kunststoffrohr umfasst mindestens eine druckfeste extrudierte radial innerste Schicht aus einem thermoplastischen Kunststoff, mindestens eine sich radial nach außen hin an die mindestens eine innerste Schicht anschließende Barriereschicht, mindestens eine in das Kunststoffrohr eingebettete, sich entlang des Kunststoffrohrs erstreckende Messleitung und mindestens eine die Messleitung und die übrigen Schichten umgebende äußere Schutzschicht aus einem thermoplastischen Kunststoff.

Die Überwachung einer solchen Rohrleitung auf Beschädigung oder Leckagen erfolgt im Stand der Technik beispielsweise mittels einer Einrichtung die einen ersten sich in der Rohrleitung etwa in Längsrichtung erstreckenden elektrischen Leiter und einen zweiten sich in der Rohrleitung etwa in Längsrichtung erstreckenden elektrischen Leiter umfasst, eine äußere Schutzmantelschicht, die die elektrischen Leiter zur Umgebung hin elektrisch isoliert, eine Spannungsquelle, um die elektrischen Leiter mit einer Spannung zu beaufschlagen sowie eine Messvorrichtung, mittels derer ein Stromfluss durch die elektrischen Leiter und/oder deren elektrischer Widerstand messbar ist, wobei innerhalb der Rohrleitung auch beispielsweise zwei oder mehrere elektrische Leiter angeordnet sein können, welche aus Materialien mit jeweils unterschiedlichen spezifischen elektrischen Widerständen bestehen.

In der DE 198 41 317 C wird eine Leckanzeigeeinrichtung für mehrschichtige Kunststoffrohre beschrieben, bei der in die Kunststoffwandung des Rohrs eine metallisch leitende Schicht eingebunden ist, die als eine erste Stromelektrode dient. In der Umgebung des Kunststoffrohres ist eine zweite Stromelektrode in einem elektrisch leitenden Material angeordnet, welche zusammen mit der ersten Stromelektrode in einen Stromkreis mit einer Stromquelle und einer Strommesseinrichtung eingebunden ist. Außerdem sind neben dem Kunststoffrohr noch zwei elektrische Potentialelektroden angeordnet, die über eine Spannungsmesseinrichtung verbunden sind. Eine Auswerteeinheit ermittelt den scheinbaren spezifischen Widerstand aus dem mit der Strommesseinrichtung gemessenen Strom und der mit der Spannungsmesseinrichtung gemessenen Spannung. Die als erste Elektrode verwendete elektrisch leitende Schicht liegt hier als Flächenelektrode vor und kann aus Aluminium bestehen. Im Falle einer Leckage im Rohr fließt ein Strom zu der zweiten Elektrode. Außerdem nimmt bei einer Leckage der scheinbare spezifische Widerstand zwischen den beiden elektrischen Potentialelektroden ab.

Dieses bekannte Verfahren mit zwei Messeinrichtungen ist vergleichsweise aufwändig und hat insbesondere den Nachteil, dass die elektrische Signalübertragung über eine Flächenelektrode sehr anfällig ist für feine Risse in der Schicht (Folie), wodurch die elektrischen Eigenschaften stark beeinflusst werden und das Verbinden mehrerer Rohrabschnitte zudem kaum praxisgerecht durchführbar ist. Die elektrische Kontaktierung zur Überbrückung einer Verbindungsstelle ist sehr schwierig und erfahrungsgemäß extrem fehleranfällig, da hier üblicherweise nur mit elektrisch leitfähigen Klebebändern gearbeitet werden kann. Die sonst in der elektrischen Installationstechnik üblichen zugfesten Steckverbindungslösungen oder das Löten zweier Leiter/Litzen ist hier nicht möglich.

Die WO 2004/038357 A1 beschreibt ein System mit Sensoren zur Detektion und Ortung einer Leckage. Hier werden zwei niederohmige Leiter verwendet, die als gedruckte Schaltung auf einer nicht leitenden flexiblen Grundfläche angeordnet sind und parallel zueinander verlaufen. Die Leiter werden von einer flüssigkeitsdichten Abdeckschicht mit geringer Leitfähigkeit überdeckt. Wenn die Abdeckschicht bei einer Leckage in einem Teilbereich benetzt wird, ändert sich in diesem Bereich der Widerstandswert und die Widerstandsänderung kann für die Detektion und Ortung gemessen werden. Der Verlauf der beiden niederohmigen Leiter ist kammförmig und diese sind ineinander verschachtelt. Nachteilig ist, dass bei diesem bekannten System die verwendeten Leiter vergleichsweise aufwändig in der Herstellung und daher kostspielig sind.

Die DE 195 19 650 C2 beschreibt ein Verfahren zur Ortung undichter Stellen in Rohrleitungen, insbesondere für die Übertragung von Fernwärme. Bei einem Messverfahren mit einer Widerstandsbrücke werden zwei elektrische Leiter verwendet, von denen der eine aus Nickelchrom (NiCr) besteht und relativ hochohmig ist, wobei der Ohmsche Widerstand zwischen diesem Leiter und einem zweiten niederohmigen Leiter gemessen wird und nach dem Prinzip des unbelasteten Spannungsteilers die Lage der Fehlerstelle ermittelt wird. Das Verfahren eignet sich für die Ortung weniger feuchter Fehlerstellen an einer Rohrleitung, hat aber eine Einsatzgrenze bei sehr feuchten Fehlerstellen.

In der DE 33 09 704 A1 wird eine Vorrichtung zur laufenden Überwachung eines wärmeisoliierten Leitungsrohres beschrieben, bei der ein hochohmiger Leiter aus einer Nickel-Chrom-Legierung verwendet wird und zusätzliche niederohmige Messschleifen aus Kupfer vorgesehen sind. Es handelt sich dabei um blanke Leiter ohne Isolierung. Die Messschleifen sind ringförmig und beabstandet und erstrecken sich nicht in Längsrichtung der Rohrleitung.

Die DE 10 2012 103 747 A1 beschreibt eine Leckage-Überwachungsvorrichtung für Fernwärmerohre, bei der zwei Drähte in die Wärmeisolierung eingelassen sind, wobei der eine Draht aus Kupfer besteht, und der andere Draht verzinnt ist, so dass die beiden Drähte unterschiedliche Widerstände haben. Hier wird ein Innenrohr aus Metall verwendet und die beiden Leiter, die zu einer Schleife verbunden sind, sind nicht elektrisch isoliert, das heißt es handelt sich um blanke Leiter. Zusätzlich wird bei dieser Vorrichtung ein Referenzisolationswiderstand verwendet, der über einen fernbedienbaren Schalter wahlweise an eine Widerstandsmesseinheit oder an zwei Messanschlüsse angekoppelt wird. Die bekannte Vorrichtung eignet sich nur zur Erkennung von Undichtigkeiten an der Fernwärmeleitung, nicht aber zur Ortung einer Leckagestelle.

Aus der EP 2 287 587 B1 ist ein Verfahren zur Überwachung von Leckagen an erdverlegten Kunststoffrohren bekannt. Das hierin offenbarte Kunststoffrohr umfasst zwei wendelförmig um die Rohrachse verlaufende elektrische Leiter, die in der Rohrwandung derart angeordnet sind, dass sie miteinander nicht in Berührung kommen. Die beiden elektrischen Leiter sind mit einer Einrichtung signaltechnisch verbunden, mittels derer gemessen und/oder angezeigt werden kann, ob ein Stromfluss durch einen der Leiter erfolgt. Hierbei wird an den ersten elektrischen Leiter eine Gleichspannung angelegt. Der zweite elektrische Leiter wird geerdet. Bei Austritt von in der Kunststoffrohrleitung strömendem Medium oder bei Beschädigung der Außenschicht der Rohrleitung kann ein zwischen den beiden Leitern auftretender Stromfluss gemessen werden. Bei dem bekannten Verfahren umfasst die Kunststoffrohrleitung lediglich eine drucktragende Innenschicht und eine als Schutzschicht gegen mechanische Einflüsse dienende Außenschicht, aber keine Barriereschicht.

Die DE 20 2018 106 981 U1 beschreibt eine Anordnung umfassend eine Rohrleitung sowie eine Einrichtung zu deren Überwachung, wobei zwischen einem Kernrohr und einer äußeren Schutzmantelschicht zwei elektrische Leiter verlegt sind, die in Längsrichtung der Rohrleitung angeordnet sind, wobei die elektrischen Leiter jeweils aus verschiedenen Materialien mit unterschiedlichen spezifischen elektrischen Widerständen bestehen. Die beiden elektrischen Leiter können permanent von einer elektrischen Gleichspannungsquelle beaufschlagt sein. Die Rohrleitung umfasst bei dieser bekannten Anordnung nur ein Kernrohr und eine äußere Schutzmantelschicht, die auf das Kernrohr aufextrudiert wird. Bevor die Schutzmantelschicht aufextrudiert wird, werden die Leiter am Kernrohr angebracht. Die Leiter verlaufen jedoch nicht wendelförmig, sondern parallel zur Rohrachse.

Aus der EP 1 564 366 A1 ist zudem ein Verfahren zur grabenlosen Verlegung von Kunststoffrohren bekannt, bei dem das Rohr eine Innenschicht aus Kunststoff, eine Außenschicht aus Kunststoff und mindesten einen wendelförmig zwischen Innenschicht und Außenschicht angeordneten elektrischen Leiter umfasst. Der wendelförmig verlegte Leiter kann beispielsweise ein flaches Kupferband sein. Nach dem Verlegevorgang wird mittels einer Messeinrichtung der Stromfluss durch den Leiter geprüft und entschieden, ob das Rohr beschädigungsfrei verlegt wurde. Auch bei diesem bekannten Verfahren ist das Kunststoffrohr, das auf Leckagen geprüft wird, nur zweischichtig ausgeführt.

In der DE10044039A1 wird ein flexibles Leitungsrohr zum Fortleiten flüssiger oder gasförmiger Medien beschrieben, bestehend aus zwei konzentrisch zueinander angeordneten Rohren, mit einem aus zumindest zwei Schichten bestehenden Innenrohr, wobei die innere Schicht aus Kunststoff und die gegenüberliegende Schicht eine Permeationssperrschicht ist und mit einem Außenrohr aus Kunststoff, welches eine innere Permeationssperrschicht aufweist. Hierbei sind in dem Raum zwischen dem Innenrohr und dem Außenrohr eine Schicht aus einem Vliesstoff aus bei Feuchtigkeitszutritt quellendem Material sowie ein schraubenlinienförmig verlaufendes Leckmelde-/ Ortungskabel angeordnet.

Die im Stand der Technik zumeist angewandte axiale Anordnung von Leiterkabeln entlang der Rohrleitung ist, insbesondere bei Kunststoffrohren, generell nachteilig, da eine axiale Dehnung des Rohres, beispielsweise durch thermische Ausdehnung oder mechanische Belastung, und auch die Biegung des Rohres bei der Installation und Herstellung nicht zu vermeiden sind. Der Stand der Technik beschreibt eine Vielzahl an Messverfahren, die eine elektrische Widerstandsmessung (Schleifenwiderstand) und/oder eine Isolationswiderstandsmessung gegen Erde nutzen, um eine Beschädigung in Kabeln, Deponiebahnen und Rohren zu detektieren.

Ausgehend von dem oben dargelegten Stand der Technik besteht die Aufgabe der vorliegenden Erfindung darin, ein verbessertes Kunststoffrohr für den Medientransport unter Innendruck mit integrierter Sensorik zur Funktionsüberwachung und Beschädigungsdetektion zur Verfügung zu stellen, bei dem die zuvor genannten Nachteile der herkömmlichen Systeme überwunden werden.

Die Lösung der vorgenannten Aufgabe liefert ein Kunststoffrohr der eingangs genannten Gattung mit den Merkmalen des Anspruchs 1.

Erfindungsgemäß umfasst das Kunststoffrohr mindestens ein Sensorband, wobei die mindestens eine Messleitung Teil dieses Sensorbandes ist und wobei das Sensorband spiralförmig um eine Längsachse der inneren Schichten des Kunststoffrohrs gewickelt angeordnet ist und die äußere Schutzschicht das Sensorband überdeckt. Als die "inneren Schichten", um die das Sensorband gewickelt ist, werden dabei erfindungsgemäß die mindestens eine druckfeste extrudierte radial innerste Schicht und die mindestens eine an die innerste Schicht anschließende Barriereschicht verstanden.

Eine Beschädigung der äußeren Schutzschicht (der äußersten Rohrschicht) eines Kunststoffrohrs oder auch der äußeren Schicht bei einem erdverlegten Kabel verursacht eine Veränderung der unter der äußersten Schicht des Rohres liegenden Barriereschicht und des Sensorbandes, so dass durch Auswerten ein oder mehrerer Messsignale auf den Zustand der Rohrleitung geschlossen werden kann.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Vorzugsweise umfasst gemäß einer Weiterbildung der Erfindung die Barriereschicht eine metallische, vorzugsweise um die Längsachse der innersten Schicht gewickelte Folie oder eine Schicht aus einem Kunststoff mit hoher Beständigkeit gegen Diffusion gasförmiger Medien.

Beispielsweise kann eine metallische Barriereschicht im Rahmen einer bevorzugten Weiterbildung der Erfindung eine Aluminium oder Edelstahl umfassende Schicht sein, wobei die Barriereschicht besonders bevorzugt eine Aluminiumfolie oder Edelstahlfolie umfasst.

Die erfindungsgemäße Barriereschicht umfasst oder ist vorzugsweise eine Permeationssperrschicht.

Die druckfeste, radial innerste Schicht umfasst vorzugsweise ein Polyolefin, insbesondere ein Polyethylen oder Polypropylen, oder ein Polyamid.

Besonders bevorzugt hat somit ein erfindungsgemäßes Kunststoffrohr von radial innen nach radial außen betrachtet den folgenden Schichtaufbau:
Das Kunststoffrohr umfasst mindestens eine erste, radial innerste, für die Innendruckfestigkeit maßgebend dimensionierte Schicht. Diese Schicht kann vorzugsweise kontinuierlich extrudiert werden. Weiterhin bevorzugt kann diese Schicht aus einem thermoplastisch verarbeitbaren Kunststoff, wie beispielsweise einem Polyolefin, insbesondere Polyethylen oder Polypropylen, oder aus einem Polyamid bestehen.

Das Kunststoffrohr umfasst weiterhin mindestens eine zweite Schicht, die als Barriereschicht dient und die auf die Rohroberfläche der mindestens einen ersten, radial innersten Schicht, überlappend aufgewickelt werden kann. Vorzugsweise ist hierbei vorgesehen, dass die Barriereschicht die Rohroberfläche der ersten Schicht vollständig überdeckt. Die Barriereschicht bildet insbesondere eine Diffusionssperrschicht aus und kann in Form einer bevorzugt mindestens etwa 20 Mikrometer dicken metallischen Folie aus beispielsweise Aluminium oder Edelstahl vorliegen.

Das Kunststoffrohr umfasst weiterhin mindestens ein Sensorband, welches spiralförmig in einem spitzen Winkel zur Rohrachse auf die äußere Oberfläche der Barriereschicht aufgewickelt ist, wobei die einzelnen Windungen des spiralförmig um die beiden inneren Schichten des Kunststoffrohrs gewickelten Sensorbandes vorzugsweise zueinander parallel und voneinander in Längsrichtung der Rohrachse beabstandet verlaufen. Das Sensorband, welches beispielsweise ein textiles Trägermaterial umfasst, weist vorzugsweise die zur Detektion einer Beschädigung verwendete Messtechnik auf.

Das Kunststoffrohr umfasst schließlich mindestens eine äußere Schutzschicht, die nach dem Anbringen des Sensorbandes zum Schutz der Rohrleitung gegen mechanische Einflüsse, vorzugsweise mit einer Schichtdicke von wenigstens etwa 2 mm, vorzugsweise durch kontinuierliche Extrusion aufgebracht wird.

Das Sensorband umfasst gemäß einer bevorzugten Ausführungsform der Erfindung ein textiles Trägermaterial, an dem oder in dem die wenigstens eine Messleitung angeordnet ist.

Dieses textile Trägermaterial kann beispielsweise ein Gewebe, Gewirke oder Vlies, vorzugsweise aus Kunststofffasern umfassen.

Besonders bevorzugt umfasst dieses textile Trägermaterial des Sensorbandes ein dehnfähiges elastisches Material.

Gemäß einer bevorzugten Weiterbildung der Erfindung kann das Sensorband mindestens zwei, vorzugsweise mindestens drei elektrisch leitfähige Litzen umfassen, die sich insbesondere wellenförmig, zickzackförmig oder mäanderförmig in Längsrichtung des Sensorbandes erstrecken.

Im Rahmen der vorliegenden Erfindung kann man zum Beispiel eine Schleifenmessung zur Selbstüberwachung der Sensorlitzen einsetzen, so dass kontinuierlich geprüft werden kann, ob die Sensorschleife mit bekanntem Leitungswiderstand elektrisch durchgängig ist. Diese Sensorschleife wird beispielsweise durch zwei von mindestens drei Litzen des Sensorbandes gebildet. Die dritte Litze innerhalb des Sensorbandes dient zur Verbesserung der Messgenauigkeit und kann dazu genutzt werden, den sich aus zum Beispiel der Leitungslänge und Übergangswiderständen an Verbindungsstellen des verbauten Rohrsystems ergebenden Gesamtwiderstand der Leitung über eine Vergleichsmessung zu kompensieren (Referenzwiderstand).

Gemäß einer möglichen bevorzugten Variante der Erfindung ist mindestens eine von mehreren Litzen eines Sensorbandes ohne elektrisch isolierende Beschichtung ausgeführt. Wird diese Litze als elektrisch nicht isolierte (fehlende Lackierung oder Ummantelung) "blanke" Litze verwendet, bildet sich durch den physischen Kontakt zu einer darunter liegenden metallischen Sperrschicht ebenfalls eine elektrische Kontaktierung zwischen metallischer Sperrschicht und Litze aus. So können dann auch Veränderungen der elektrischen Eigenschaften der metallischen Sperrschicht (die dann wie eine Flächenelektrode zu betrachten ist) gemessen werden und es kann auf Defekte oder Beschädigungen zurückgeschlossen werden.

Gemäß einer bevorzugten Weiterbildung umfasst die Messleitung oder umfassen die elektrisch leitfähigen Litzen jeweils einen Leiter aus einer Cu-, einer Al- oder einer NiCr-basierten Legierung, welcher jeweils vorzugsweise durch eine Beschichtung, eine dünne Kunststoffummantelung oder eine Lackierung elektrisch isoliert ist.

Im Rahmen einer Weiterbildung der vorliegenden Erfindung können in dem Sensorband beispielsweise zwei oder mehrere elektrisch leitfähige Litzen vorgesehen sein, die aus verschiedenen Legierungen mit jeweils unterschiedlichen elektrischen Widerständen bestehen.

Beispielsweise kann auch mindestens eine von mehreren Litzen eines Sensorbandes ohne elektrisch isolierende Beschichtung ausgeführt sein.

Gemäß einer möglichen alternativen Variante der Erfindung kann das Sensorband mindestens einen Lichtwellenleiter, insbesondere ein Glasfaserkabel, umfassen, wobei der Lichtwellenleiter vorzugsweise zusätzlich zu mindestens zwei, besonders bevorzugt zusätzlich zu mindestens drei elektrisch leitenden Litzen in einem Sensorband vorgesehen ist.

Glasfaserbasierte Sensoren werden seit vielen Jahren für die Messung von Temperatur oder Dehnung eingesetzt. Wesentliche Vorteile gegenüber ihren elektrischen Pendants ergeben sich bei Messumgebungen mit großen elektromagnetischen Feldern, schwierigen chemischen Bedingungen sowie bei Anwendungen, für die eine hohe Messpunktdichte gefordert ist, große Entfernungen überbrückt werden müssen oder kompakte Sensormaße bzw. geringes Gewicht entscheidend sind. Konzeptionell bestehen solche faserbasierten Systeme aus einer Ausleseeinheit und der daran angeschlossenen passiven Sensorfaser, die erfindungsgemäß beispielsweise mäanderförmig, wellenförmig oder zickzackförmig als eine der Litzen in das zuvor beschriebene Sensorband integriert sein kann. Die Ausleseeinheit sendet Licht in die Faser und analysiert reflektierte oder rückgestreute Anteile. Es wird zwischen punktförmig und verteilt messenden Systemen unterschieden. Punktförmige Sensorlösungen haben einen einzelnen Sensor am Faserende.

Bei verteilt messenden Systemen müssen keine Sensoren in die Faser eingebracht werden. Vielmehr wird vom Fasermaterial selbst zurückgestreutes Licht ausgewertet, um die gewünschte Information über Temperatur oder Dehnung zu erhalten. Auch hier werden zwei Arten unterschieden, die je nach Anwendungsfall zu bevorzugen sind: Systeme, die auf dem Raman- bzw. Brillouin-Effekt basieren, eignen sich beispielsweise für Messstrecken bis zu einigen 10 km bei einer räumlichen Auflösung entlang der Faser bis zu 10 cm. Änderungen der Temperatur entlang der Faser können mit einer absoluten Genauigkeit von ca. ± 0,3 °C bestimmt werden.

Die zweite Gruppe sind Systeme, die auf der Auswertung der Rayleigh-Streuung basieren und mit Auflösungen im Millimeterbereich bis zu nur etwa 50 m lange Messstrecken erlauben. Damit wird praktisch jeder Punkt der Glasfaser zum Sensor. Herkömmliche Verfahren benötigen dafür hunderte oder tausende konventioneller Punktsensoren mit zugehörigen Leitungen und einen immensen Installationsaufwand.

Die vorliegende Erfindung betrifft somit besonders bevorzugt ein mindestens dreischichtiges Rohrsystem mit integrierter bandförmiger Sensorik, umfassend mindestens ein spiralförmig um die Rohrachse gewickeltes Sensorband, das es ermöglicht, Leckagen der Rohrleitung zu detektieren und sogar unerwünschte, durch Überlast entstehende, Verformungen frühzeitig, also schon vor einem Schadenseintritt zu erkennen und an eine Überwachungseinheit zu melden. Eine solche Sensorik an Rohrleitungen bietet insbesondere bei Kunststoffruckrohren, die umweltgefährdende Medien wie beispielsweise grundwassergefährdende Industrieabwässer oder sicherheitstechnisch kritische Gase wie beispielsweise Wasserstoff (Bildung explosionsfähiger Atmosphären) oder Ammoniak (für Mensch und Umwelt schädliches Gas) befördern, ein erhöhtes Maß an Sicherheit.

Dabei können beispielsweise die folgenden in der Literatur bekannten Messverfahren mit dem erfindungsgemäß ausgestalteten Rohr/Sensoraufbau kombiniert angewendet werden.
a) ein Überwachungssystem, dass auf bekannten elektrischen Messverfahren (Schleifenwiderstand und Isolationswiderstand) beruht.
b) oder ein Messsystem, das alternativ zu oder zusätzlich zu a) auf einer faseroptischen Temperaturmessung beruht und die Ortung von Schäden mit hoher Ortsauflösung möglich macht.

Um die Anwendung dieser beiden Verfahren in einer Rohrleitung praxisgerecht möglich zu machen, wird in der vorliegenden Erfindung ein neuartiger Rohraufbau mit integriertem, spiralförmig gewickeltem Sensorband vorgeschlagen.

Um die in das Rohrsystem integrierte Sensorik und die Umwelt vor Beeinträchtigungen durch nach außen, durch die Kunststoffrohrwand hindurch, permeierenden Medienstoffströmen zu schützen und für eine Lebensdauer von beispielsweise mindestens 50 Jahren (üblich für ein Rohr ohne Messtechnik) nutzbar zu machen, umfasst oder ist gemäß einer Ausgestaltungsvariante der Erfindung die Barriereschicht eine Permeationssperrschicht. Diese soll vermeiden, dass zum Beispiel durch Korrosion der Sensorik oder auch Beeinflussung der durch die Sensorik erfassten Signale/Messwerte diese verfälschend beeinflusst werden und zudem im Regelbetrieb der Rohrleitung Emissionen vermeiden, also verhindern, dass ein Medienstoffstrom in die Umwelt permeiert. In einer Ausführungsvariante kann eine metallische Permeationssperrschicht durch eine einfache elektrische Kontaktierung mit dem Sensorband auch als Flächenelektrode genutzt werden, um eine Veränderung der elektrischen Eigenschaften (zum Beispiel elektrische Widerstandsänderungen durch Korrosion, Eindringen von Feuchtigkeit in das Schichtsystem des Rohres, oder Rissbildung in der metallischen Sperrschicht durch mechanische Belastung) der metallischen Permeationssperrschicht kontinuierlich zu überwachen.

Ein großer Vorteil von biegeweichen Kunststoffrohren (beispielsweise aus Polyethylen) im Vergleich zu Stahl-, Guss- oder GFK-Rohren ist, dass diese in langen Längen auf Trommeln aufgewickelt werden können und so kostengünstig transportiert und unterirdisch verbaut werden können. Insbesondere die in der Literatur bekannten grabenlosen bzw. grabenarmen Verlegemethoden für Kunststoffrohre, wie zum Beispiel Horizontalspülbohren oder das Einpflügen von Leitungen haben große wirtschaftliche Bedeutung und sind hier etabliert.

Um die Möglichkeit einer kontinuierlichen (endlosen) Herstellung eines Rohrsystems und dessen Installation mittels grabenloser Verlegemethoden sowie das Aufwickeln von beispielsweise bis zu mehreren 100 Metern Rohr auf eine Trommel weiterhin zu ermöglichen, wird eine bevorzugte Konfiguration des erfindungsgemäß vorgesehen Sensorbandes vorgeschlagen. Die Einbettung von Sensorlitzen erfolgt in ein sehr dehnfähiges (insbesondere 5% bis 50% in Längsrichtung) textiles Band, wobei eine mäanderförmige, wellenförmige oder zick-zackförmige Anordnung der Litzen vorgesehen ist und dieses Sensorband spiralförmig um das Rohr gewickelt wird. So kann ein Abreißen der Litzen bei Längsdehnung des Rohres unter Zugbelastungen, beim Biegen des Rohres durch das Auftrommeln oder während der Verlegung und bei auftretender Umfangsdehnung durch Innendruck vermieden werden. Zudem ist diese Ausgestaltung bei der kontinuierlichen Herstellung der Rohre mittels Extrusion sehr gut und kostengünstig zu realisieren.

Gemäß einer bevorzugten Weiterbildung der Erfindung umfasst nicht nur die innerste druckfeste Schicht des Kunststoffrohrs, sondern auch die äußere Schutzschicht ein Polyolefin, insbesondere ein Polyethylen oder Polypropylen, oder ein Polyamid.

Dabei hat, um einen ausreichenden Schutz der Rohrleitung gegen mechanische Einflüsse zu gewährleisten, die äußere Schutzschicht des Kunststoffrohrs vorzugsweise eine Schichtdicke von wenigstens etwa 2 mm, insbesondere von wenigstens etwa 2,5 mm.

Gegenstand der vorliegenden Erfindung ist weiterhin ein Verfahren zur Installation einer Rohrleitung umfassend mindestens zwei miteinander zu verbindende Rohrabschnitte eines Kunststoffrohrs mit den zuvor beschriebenen Merkmalen, bei dem die jeweiligen Enden der zu verbindenden beiden Rohrabschnitte stirnseitig voreinander angeordnet und dann entweder direkt miteinander verschweißt werden oder eine Verbindung zwischen den zu verbindenden Rohrabschnitten über ein weiteres Verbindungselement, insbesondere über eine Rohrmuffe (Fitting) hergestellt wird, wobei erfindungsgemäß entweder die Schweißnaht oder alternativ die Rohrmuffe elektrisch überbrückt werden, wobei das jeweils in die miteinander zu verbindenden Rohrabschnitte integrierte Sensorband über die Verbindungsstelle hinweg geführt wird und die Messleitung(en), insbesondere die elektrisch leitenden Litzen elektrisch durchgängig miteinander verbunden werden und gegebenenfalls auch die Lichtwellenleiter optisch durchgängig miteinander verbunden werden.

Vorzugsweise werden bei diesem erfindungsgemäßen Verfahren die jeweiligen Enden der dehnfähigen Sensorbänder der Rohrabschnitte beidseitig der Verbindungsstelle durch Aufbringen einer Zugkraft über die Verbindungsstelle hinweggeführt und danach werden die elektrisch leitenden Litzen und gegebenenfalls auch die Lichtwellenleiter-Fasern mittels geeigneter Verbindungselemente, insbesondere mittels Steckverbinder oder dergleichen sicher und feuchtigkeitsdicht miteinander verbunden.

Vorzugsweise wird gemäß einer Weiterbildung des Verfahrens der Verbindungsbereich der miteinander verbundenen Rohrabschnitte der Rohrleitung durch geeignete Nachumhüllungselemente, insbesondere mittels Schrumpfschläuchen, Kaltschweißbändern oder dergleichen abgedichtet.

Gegenstand der vorliegenden Erfindung ist weiterhin ein Verfahren zur Herstellung eines Kunststoffformteils, insbesondere Rohrbogens, umfassend mindestens die folgenden Schritte:
- Bereitstellen eines erfindungsgemäßen Kunststoffrohrs,
- Ablängen des Kunststoffrohrs auf eine für das Formteil, insbesondere den Rohrbogen vorgesehene axiale Länge,
- Verformen des abgelängten Kunststoffrohrs zu einem Formteil, insbesondere Biegen des abgelängten Kunststoffrohrs zu einem Rohrbogen mit einem vorgesehenen Biegeradius.

Dieses Verfahren hat erhebliche Vorteile gegenüber der herkömmlichen Vorgehensweise bei der Herstellung derartiger Formteile. Nach dem Stand der Technik muss man nämlich zunächst ein Formteil umfassend die inneren Schichten des Rohraufbaus formen, dann die Messleitungen anbringen und danach das Formteil mit der Schutzschicht überziehen. Bei dem erfindungsgemäßen Verfahren kann hingegen das Formteil beispielsweise ein Rohrbogen aus einem Abschnitt eines fertigen mehrschichtigen Kunststoffrohrs hergestellt werden, welcher bereits die Messtechnik enthält. Diesen Abschnitt eines Kunststoffrohrs muss man dann nur noch beispielsweise durch einen Biegevorgang in die gewünschte Form des Formteils, insbesondere zu einem Rohrbogen verformen. Die in dem Kunststoffrohrabschnitt bereits enthaltenen Messleitungen werden dabei nicht beschädigt, da sie mäanderförmig verlegt sind und da das Sensorband ein dehnbares Trägermaterial umfasst.

Gegenstand der vorliegenden Erfindung ist weiterhin ein nach dem zuvor beschriebenen Verfahren hergestelltes Kunststoffformteil, insbesondere ein Rohrbogen.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Dabei zeigen:
Figur 1 eine perspektivische Ansicht eines beispielhaften erfindungsgemäßen Kunststoffrohres, bei dem die Schichten teilweise aufgeschnitten sind;
Figur 2 einen Querschnitt durch ein beispielhaftes Kunststoffrohr gemäß der Erfindung;
Figur 3 eine schematisch vereinfachte Ansicht eines beispielhaften erfindungsgemäßen Sensorbandes mit wellenartigen elektrisch leitenden Litzen, welches um die Längsachse des Kunststoffrohres gewickelt wird;

### Ausführungsbeispiel und Funktion eines mindestens dreischichtigen erfindungsgemäßen Rohres:

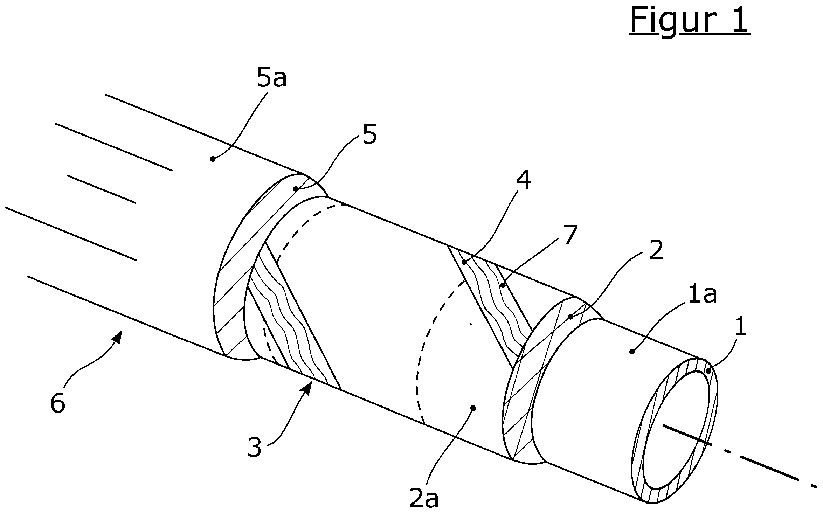

Das in Figur 1 dargestellte beispielhafte Kunststoffrohr ist ein mit Innendruck beaufschlagtes, mittels Extrusion hergestelltes, thermoplastisches Kunststoffrohr 6 zum Transport von gasförmigen und flüssigen Medien. Dieses umfasst eine erste, kontinuierlich extrudierte und für die Innendruckfestigkeit maßgebend dimensionierte radial innerste Schicht 1 des Rohres, die bevorzugt mindestens etwa 10mm dick ist und die aus einem thermoplastisch verarbeitbaren Kunststoff wie beispielsweise einem Polyolefin, insbesondere Polyethylen oder Polypropylen oder aus einem Polyamid besteht. Die äußere Oberfläche dieser radial innersten Schicht 1 ist in Figur 1 mit dem Bezugszeichen 1 a benannt. Diese ist im vordersten Bereich des Kunststoffrohrs 6 erkennbar, da dort in der Darstellung von Figur 1 die übrigen Schichten entfernt wurden.

Das beispielhafte erfindungsgemäße Kunststoffrohr 6 gemäß Figur 1 umfasst weiterhin eine zweite, auf die Rohroberfläche überlappend aufgewickelte und die Rohroberfläche vollständig überdeckende Barriereschicht 2, insbesondere eine Diffusionssperrschicht 2, die in Form einer bevorzugt mindestens etwa 20 Mikrometer dicken metallischen Folie aus beispielsweise Aluminium oder Edelstahl vorliegt. Man erkennt in Figur 1, dass die Barriereschicht 2 aus einzelnen Bahnen besteht, die überlappend um die radial innerste Schicht 1 gewickelt werden können. In dem sich axial in der Zeichnung gemäß Figur 1 nach links hin anschließenden Abschnitt des Kunststoffrohrs 6 wurde die äußere Schutzschicht entfernt, so dass man die mit 2 a bezeichnete äußere Oberfläche der Barriereschicht 2 sieht.

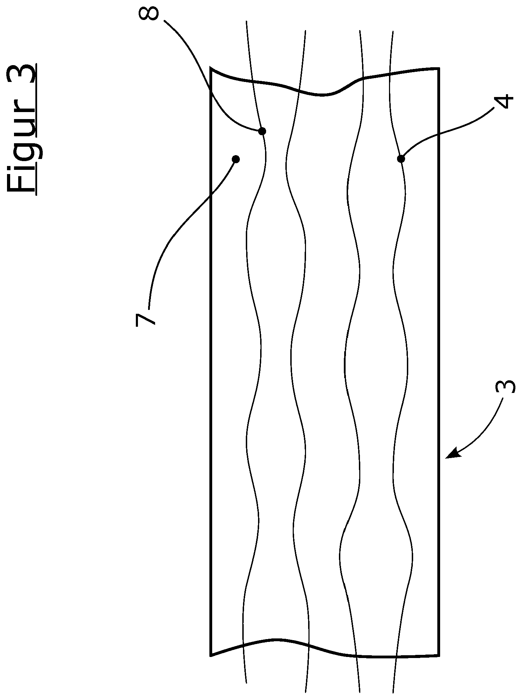

Das beispielhafte erfindungsgemäße Kunststoffrohr gemäß Figur 1 umfasst weiterhin ein Sensorband 3, welches wie man in Figur 1 erkennt spiralförmig in einem spitzen Winkel zur Rohrachse auf die äußere Oberfläche 2 a der Barriereschicht aufgewickelt ist. Die einzelnen Windungen des spiralförmig um die beiden inneren Schichten 1 und 2 des Rohrs gewickelten Sensorbandes 3 verlaufen zueinander parallel und voneinander in Längsrichtung der Rohrachse beabstandet. Das Sensorband 3 umfasst die zur Detektion einer Beschädigung verwendete Messtechnik. Das Sensorband ist für sich allein in der Figur 3 noch einmal in der Seitenansicht dargestellt. Dieses Sensorband 3 umfasst in dem Ausführungsbeispiel mindestens drei elektrisch leitfähige Litzen 4, die in ein textiles Kunststoffgewebe als Trägermaterial 7 eingearbeitet und mäanderförmig, wellenförmig oder zickzack-förmig (zur Dehnungskompensation) zur Längsachse des Sensorbandes 3 angeordnet sind, wobei diese mindestens drei Leiter/Litzen 4 beispielsweise aus einer Cu-, einer Al-, oder einer NiCr-basierten Legierung bestehen und elektrisch durch eine Beschichtung, wie üblicherweise eine dünne Kunststoffummantelung oder Lackierung, isoliert sind. Die mindestens drei Leiter/Litzen 4 in dem Sensorband 3 können wahlweise aus derselben Legierung bestehen, es ist aber auch möglich die mindestens drei Leiter/Litzen 4 auch aus unterschiedlichen Legierungen (mit verschiedenen elektrischen Widerständen) zu kombinieren. Dies kann gegebenenfalls Vorteile für die später vorgesehene elektrische Überwachung (leakage monitoring) des Rohres haben.

Das beispielhafte erfindungsgemäße Kunststoffrohr umfasst weiterhin eine dritte, vorzugsweise kontinuierlich extrudierte äußere Schutzschicht (Schutzmantel) 5 mit einer Schichtdicke von beispielsweise mindestens 2 mm, vorzugsweise mindestens 2,5 mm, die aus einem thermoplastisch verarbeitbaren Kunststoff wie beispielsweise einem Polyolefin, insbesondere einem Polyethylen oder Polypropylen oder aus einem Polyamid besteht. Diese Schutzschicht 5 bildet die äußerste Schicht des Rohrsystems und schützt die darunterliegende Sperrschicht 2 sowie das textile Sensorband 3 vor Beschädigungen bei der Installation der Rohrleitung und schirmt die verbaute Sensorik vor Feuchtigkeit aus der Umgebung des Rohres ab, wie zum Beispiel bei der Lagerung und nach der Installation Rohrleitung ins Erdreich. Das Sensorband 3 und die Metallfolie, die die Diffusionssperrschicht 2 ausbildet, liegen dann also zwischen dem Kernrohr (innerste Schicht) 1 und dem Schutzmantel 5 und sind zum einen durch den Schutzmantel 5 gegen mechanische Einflüsse geschützt. Durch den Vorgang der Umhüllung sind sie von der äußeren Schutzschicht 5 so eng überzogen, dass sie absolut lagefixiert sind und keinen Bewegungsspielraum in der fertigen Rohrleitung haben, weshalb die mäanderförmige Ausgestaltung des dehnfähigen Sensorbandes 3 und dessen spiralförmige Wicklung vorteilhaft sind, damit bei axialen Zugbelastungen sowie Biegebelastungen des Rohres die Litzen 4 innerhalb des Sensorbandes 3 nicht reißen. In der Figur 1 ist die äußere Schutzschicht 5 in der Zeichnung links dargestellt, wobei die äußere Oberfläche 5 a dieser Schutzschicht gleichzeitig die äußere Oberfläche des Kunststoffrohres 6 bildet.

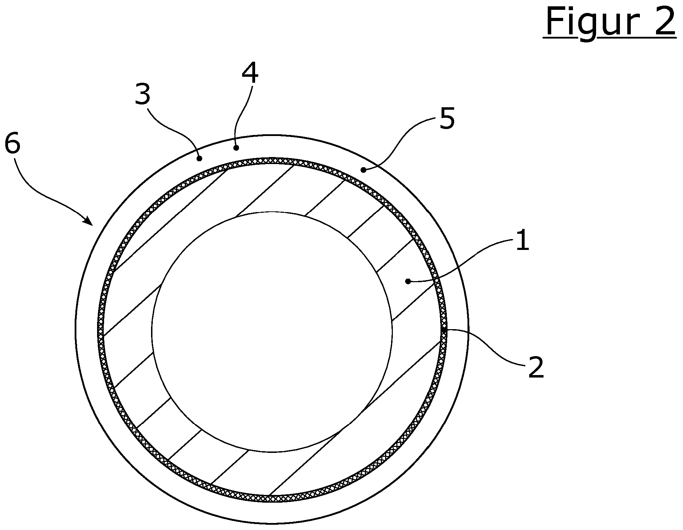

In der Figur 2 ist ein beispielhaftes dreischichtiges Kunststoffrohr 6 gemäß dem zuvor beschriebenen Ausführungsbeispiel noch einmal im Querschnitt dargestellt. Man erkennt die radial innerste druckfeste Schicht 1, die darauf aufgebrachte Barriereschicht, insbesondere Diffusionssperrschicht 2, das Sensorband 3 und die radial äußere Schicht 5 des Schutzmantels.

Wenn eine Beschädigung dieses Schutzmantels 5 auftritt, erhöht sich die Gefahr eines Schadens auch am Kernrohr 1, da dieses dann ungeschützt ist und weniger widerstandsfähig ist gegen mechanische Belastungen und Witterungseinflüsse, so dass die Gefahr einer Leckage besteht, durch die dann ein für die Umwelt schädliches Fluid, welches in der Rohrleitung unter Druck transportiert wird, unkontrolliert in die Umgebung, das heißt in das Erdreich oder ein Gewässer gelangen kann. Daher ist es sehr wichtig, nicht nur sehr frühzeitig zu erfahren, wenn eine solche Leckage an der Rohrleitung auftritt, sondern diese auch möglichst genau lokalisieren zu können, da die Rohrleitung im Erdreich verlegt ist und daher eine Reparatur Grabungsarbeiten erfordert, um sich einen Zugang zu der Leckagestelle zu verschaffen. Da diese Erdarbeiten aufwändig sind, ist man naturgemäß bestrebt, diese auf ein Minimum zu beschränken, wozu ein genaues Orten der Leckagestelle erforderlich ist.

Die bevorzugt cm-genaue Ortung von Schäden am Rohr wird erfindungsgemäß mit einer Ausführungsvariante unter Einsatz eines im Sensorband integrierten Lichtwellenleiters 8 (siehe Figur 3) realisiert. Dieser Lichtwellenleiter 8 ist ebenso wie die elektrisch leitenden Litzen 4 in das dehnbare textile Trägermaterial 7 des Sensorbandes 3 integriert. Er kann sich ebenso wie die Litzen 4 beispielsweise wellenförmig in Längsrichtung des Sensorbandes 3 gesehen erstrecken. Dieser Lichtwellenleiter 8 kann entweder zusätzlich zu drei elektrisch leitenden Litzen 4 vorgesehen sein oder beispielsweise auch eine der drei Litzen 4 ersetzen, so dass dann nur zwei elektrisch leitende Litzen vorhanden sind. Über die eingangs beschriebenen Messprinzipien kann eine Temperaturveränderung schon ab ca. ± 0,3 K über einen beispielsweise etwa 10 km langen Rohrabschnitt räumlich aufgelöst werden. So dient der Lichtwellenleiter 8 als linienförmiger Temperatursensor mit hoher Ortsauflösung. Eine schnelle und gezielte, kostensparende Reparatur am Schadensort wird so gewährleistet.

Tritt ein Schaden (an der äußersten Schutzschicht 5 oder der innersten Schicht 1 des Rohres) an der Rohrleitung 6 auf, umspült das in der Rohrleitung transportierte Medium oder Feuchtigkeit aus dem umgebenden Erdreich das Sensorband 3. Hier liegt ein Vorteil gegenüber herkömmlichen Verfahren, die ausschließlich auf Veränderungen der elektrischen Eigenschaften bei Schadenseintritt reagieren und in der Regel nur bei flüssigen Medien funktionieren, da mithilfe des Lichtwellenleiters zusätzlich auch eine Detektion bei gasförmigen Medien möglich ist.

Beim Austritt gasförmiger Medien, die beispielsweise unter einem Innendruck p1 in der Rohrleitung transportiert werden, sinkt der Gasdruck beim Ausströmen aus der Leckage auf den Umgebungsdruck p2 und das Gas entspannt sich. Als Folge des "Joule-Thomson-Effekts", der aus der Gas-Thermodynamik hinreichend bekannt ist, bewirkt die Druckänderung auch eine messbare Temperaturänderung des Gases. Beispielsweise beträgt bei Methan (Erdgas) die Abkühlung ca. 0,5 K bei einer Druckentspannung von 1 bar. Vereinfachend und zur Verdeutlichung der hervorragenden Eignung des Messprinzips kann folgender Zusammenhang angenommen werden: Die Betriebsdrücke betragen bei Erdgas in der Regel bis zu 10 bar, sodass bei einer Entspannung des Gases von p1=10 bar auf p2=1 bar (Umgebungsdruck) eine Temperaturänderung von 4,5 K eintritt. Die eingangs genannte Messempfindlichkeit der Lichtwellenleiter-Sensoren beträgt ca. ± 0,3 K und kann damit die schadenbedingte Temperaturänderung sehr genau messen und lokalisieren.

### Weitere Vorteile der Erfindung, die die Installation der Rohrleitung erleichtern und die Funktion der Messtechnik absichern - Verfahren zur Verbindung von Rohrabschnitten

Zur Herstellung eines Leitungsstranges aus verschiedenen Rohrabschnitten und beim Verbau von Formteilen (Bögen, Armaturen etc.) in eine Rohrleitung müssen insbesondere bei Mehrschichtrohren einige Besonderheiten beachtet werden.

Zum einen sind bei solchen Rohren nicht alle Schichten miteinander stoffschlüssig verschweißt, sodass einzelne Schichten vor der Verbindungsherstellung zurückgeschnitten und teilweise entfernt werden können, um die elektrische Kontaktierung zu ermöglichen. Dies gilt beispielsweise bei dem erfindungsgemäßen Kunststoffrohr für die metallische Sperrschicht. Zum anderen müssen die Verbindungsstellen elektrisch überbrückt werden, um die elektrische oder faseroptische Überwachung der gesamten Rohrleitung möglich zu machen. Insbesondere die mäanderförmige, wellenförmige oder zickzack-förmige Anordnung der Leiter (Litzen) und die dehnfähige Ausgestaltung des Sensorbandes erleichtert diesen Arbeitsschritt erheblich.

Zur Verbindungsherstellung zwischen zwei Rohrabschnitten einer Rohrleitung liegen die jeweiligen Enden der zu verbindenden beiden Rohrabschnitte üblicherweise stirnseitig voreinander und werden dann entweder miteinander direkt verschweißt oder es wird ein weiteres Verbindungselement wie zum Beispiel eine handelsübliche Muffe (Fitting) zur Verbindungherstellung genutzt. Dabei müssen sowohl die Schweißnaht (Fall a) als auch die Muffe (Fall b) elektrisch überbrückt werden. Daher muss das in die Rohrabschnitte integrierte Sensorband über die Verbindungsstelle hinweg geführt werden und sowohl elektrisch durchgängig (metallische Litzen) als auch optisch durchgängig (Lichtwellenleiter) sicher verbunden werden. Die mäanderförmige, wellenförmige oder zickzack-förmige Anordnung der Litzen und der Lichtwellenleiter-Faser und das dehnfähige Textilband als Trägermaterial sind eine in der Praxis sehr vorteilhafte Neuerung. Die dehnfähigen Sensorbandenden der Rohrabschnitte (rechts und links von der Verbindungsstelle) können durch Zug per Hand über die Verbindungsstelle hinweggeführt werden und dann können die Litzen 4 und die Lichtwellenleiter-Faser 8 beispielsweise mittels in der Elektroinstallationstechnik handelsüblicher Steckverbinder sicher und feuchtigkeitsdicht verbunden werden. Zuletzt wird die gesamte Verbindung vorzugsweise mittels im Rohrbau bekannter Nachumhüllungstechniken (Schrumpfschläuche, Kaltschweißbänder etc.) abgedichtet und für den Erdeinbau bereitgestellt.

### Bezugszeichenliste

- 1: radial innerste Schicht
- 1a: äußere Oberfläche der radial innersten Schicht
- 2: Barriereschicht, Diffusionssperrschicht
- 2a: äußere Oberfläche der Barriereschicht
- 3: Sensorband
- 4: Messleitung, elektrisch leitende Litzen
- 5: radial äußerste Schutzschicht, Schutzmantel
- 5a: äußere Oberfläche der radial äußersten Schicht
- 6: Kunststoffrohr
- 7: Textiles Trägermaterial
- 8: Lichtwellenleiter

## Patentansprüche

1. Kunststoffrohr für den Medientransport unter Innendruck mit integrierter Sensorik zur Funktionsüberwachung und Beschädigungsdetektion, umfassend: mindestens eine druckfeste extrudierte radial innerste Schicht (1) aus einem thermoplastischen Kunststoff, mindestens eine sich radial nach außen hin an die mindestens eine innerste Schicht (1) anschließende Barriereschicht (2), mindestens eine in das Kunststoffrohr eingebettete, sich entlang des Kunststoffrohrs erstreckende Messleitung (4), und mindestens eine die Messleitung (4) und die übrigen Schichten (1, 2) umgebende äußere Schutzschicht (5) aus einem thermoplastischen Kunststoff,
**dadurch gekennzeichnet, dass**
das Kunststoffrohr weiterhin mindestens ein Sensorband (3) umfasst, die mindestens eine Messleitung (4) Teil dieses Sensorbandes (3) ist, wobei das Sensorband (3) spiralförmig um eine Längsachse der inneren Schichten (1, 2) des Kunststoffrohrs gewickelt angeordnet ist und die äußere Schutzschicht (5) das Sensorband (3) überdeckt.

2. Kunststoffrohr für den Medientransport nach Anspruch 1, **dadurch gekennzeichnet, dass** die Barriereschicht (2) eine metallische, vorzugsweise um die Längsachse der innersten Schicht (1) gewickelte, Folie umfasst oder eine Schicht aus einem Kunststoff mit hoher Beständigkeit gegen Diffusion gasförmiger Medien.

3. Kunststoffrohr für den Medientransport nach Anspruch 2, **dadurch gekennzeichnet, dass** die Barriereschicht (2) eine Aluminium oder Edelstahl umfassende Schicht ist und vorzugsweise eine Aluminiumfolie oder Edelstahlfolie umfasst.

4. Kunststoffrohr für den Medientransport nach einem der Ansprüche 1 bis 3, **dadurch gekennzeichnet, dass** die Barriereschicht (2) eine Permeationssperrschicht umfasst oder ist.

5. Kunststoffrohr für den Medientransport nach einem der Ansprüche 1 bis 4, **dadurch gekennzeichnet, dass** die innerste Schicht (1) ein Polyolefin, insbesondere ein Polyethylen oder Polypropylen, oder ein Polyamid umfasst.

6. Kunststoffrohr nach einem der Ansprüche 1 bis 5, **dadurch gekennzeichnet, dass** das Sensorband (3) ein textiles Trägermaterial (7) umfasst, an dem oder in dem die wenigstens eine Messleitung (4) angeordnet ist.

7. Kunststoffrohr nach Anspruch 6, **dadurch gekennzeichnet, dass** das textile Trägermaterial (7) ein Gewebe, ein Gewirke oder ein Vlies, vorzugsweise aus Kunststofffasern, umfasst.

8. Kunststoffrohr nach einem der Ansprüche 6 + bis 7, **dadurch gekennzeichnet, dass** das textile Trägermaterial (7) des Sensorbandes ein dehnfähiges elastisches Material umfasst.

9. Kunststoffrohr nach einem der Ansprüche 1 bis 8, **dadurch gekennzeichnet, dass** das Sensorband (3) mindestens zwei, vorzugsweise mindestens drei elektrisch leitfähige Litzen (4) umfasst, die sich wellenförmig, zickzackförmig oder mäanderförmig in Längsrichtung des Sensorbandes (3) erstrecken.

10. Kunststoffrohr nach einem der Ansprüche 1 bis 9, **dadurch gekennzeichnet, dass** die Messleitung oder die elektrisch leitfähigen Litzen (4) jeweils einen Leiter aus einer Cu-, einer Al- oder einer NiCr-basierten Legierung umfassen, welcher jeweils vorzugsweise durch eine Beschichtung, eine dünne Kunststoffummantelung oder eine Lackierung elektrisch isoliert ist.

11. Kunststoffrohr nach einem der Ansprüche 9 oder 10, **dadurch gekennzeichnet, dass** zwei oder mehrere elektrisch leitfähige Litzen (4) vorgesehen sind, die aus verschiedenen Legierungen mit jeweils unterschiedlichen elektrischen Widerständen bestehen.

12. Kunststoffrohr nach einem der Ansprüche 9 bis 11, **dadurch gekennzeichnet, dass** mindestens eine von mehreren Litzen (4) eines Sensorbandes (3) ohne elektrisch isolierende Beschichtung ausgeführt ist.

13. Kunststoffrohr nach einem der Ansprüche 1 bis 12, **dadurch gekennzeichnet, dass** das Sensorband (3) mindestens einen Lichtwellenleiter (8), insbesondere ein Glasfaserkabel, umfasst, wobei der Lichtwellenleiter (8) vorzugsweise zusätzlich zu mindestens zwei, besonders bevorzugt zusätzlich zu mindestens drei elektrisch leitenden Litzen (4) in einem Sensorband (3) vorgesehen ist.

14. Kunststoffrohr nach einem der Ansprüche 1 bis 13, **dadurch gekennzeichnet, dass** die äußere Schutzschicht (5) ein Polyolefin, insbesondere ein Polyethylen oder Polypropylen, oder ein Polyamid umfasst.

15. Kunststoffrohr nach einem der Ansprüche 1 bis 14, **dadurch gekennzeichnet, dass** die äußere Schutzschicht (5) eine Schichtdicke von wenigstens etwa 2 mm, insbesondere von wenigstens etwa 2,5 mm aufweist.

16. Verfahren zur Installation einer Rohrleitung, umfassend: mindestens zwei miteinander zu verbindende Rohrabschnitte eines Kunststoffrohrs (6) mit den Merkmalen eines oder mehrerer der Ansprüche 1 bis 15, bei dem die jeweiligen Enden der zu verbindenden beiden Rohrabschnitte stirnseitig voreinander angeordnet und dann entweder direkt miteinander verschweißt werden oder eine Verbindung zwischen den zu verbindenden Rohrabschnitten über ein weiteres Verbindungselement, insbesondere über eine Rohrmuffe,Fitting, hergestellt wird,
**dadurch gekennzeichnet, dass**
entweder die Schweißnaht oder alternativ die Rohrmuffe elektrisch überbrückt werden, wobei das jeweils in die miteinander zu verbindenden Rohrabschnitte integrierte Sensorband (3) über die Verbindungsstelle hinweg geführt wird und die Messleitung (4), insbesondere elektrisch leitende Litzen (4), elektrisch durchgängig miteinander verbunden werden und gegebenenfalls auch der oder die Lichtwellenleiter (8) optisch durchgängig miteinander verbunden werden.

17. Verfahren nach Anspruch 16, **dadurch gekennzeichnet, dass** die jeweiligen Enden der dehnfähigen Sensorbänder (3) der Rohrabschnitte beidseitig der Verbindungsstelle durch aufbringen einer Zugkraft über die Verbindungsstelle hinweggeführt werden und danach die elektrisch leitenden Litzen (4) und gegebenenfalls auch die Lichtwellenleiter-Fasern (8) mittels geeigneter Verbindungselemente, insbesondere mittels Steckverbinder oder dergleichen sicher und feuchtigkeitsdicht miteinander verbunden werden.

18. Verfahren nach einem der Ansprüche 16 oder 17, **dadurch gekennzeichnet, dass** der Verbindungsbereich der miteinander verbundenen Rohrabschnitte der Rohrleitung durch geeignete Nachumhüllungselemente, insbesondere mittels Schrumpfschläuchen, Kaltschweißbändern oder dergleichen abgedichtet wird.

19. Verfahren zur Herstellung eines Kunststoffformteils, insbesondere eines Rohrbogens, umfassend mindestens die folgenden Schritte:
- Bereitstellen eines Kunststoffrohrs mit den Merkmalen eines der Ansprüche 1 bis 15,
- Ablängen des Kunststoffrohrs auf eine für das Formteil, insbesondere den Rohrbogen vorgesehene axiale Länge,
- Verformen des abgelängten Kunststoffrohrs zu einem Formteil, insbesondere Biegen des abgelängten Kunststoffrohrs zu einem Rohrbogen mit einem vorgesehenen Biegeradius.

20. Kunststoffformteil, hergestellt nach einem Verfahren gemäß Anspruch 19.

## Claims

1. Plastic pipe for transporting media under internal pressure with integrated sensor technology for functional monitoring and damage detection, comprising: at least one pressure-resistant extruded radially innermost layer (1) made of a thermoplastic material, at least one barrier layer (2) adjoining the at least one innermost layer (1) radially outwards, at least one measuring line (4) embedded in the plastic pipe and extending along the plastic pipe, and at least one outer protective layer (5) made of a thermoplastic material surrounding the measuring line (4) and the other layers (1, 2),
**characterized in that**
the plastic pipe further comprises at least one sensor band (3), the at least one measuring line (4) is part of this sensor band (3), wherein the sensor band (3) is arranged wound spirally around a longitudinal axis of the inner layers (1, 2) of the plastic pipe and the outer protective layer (5) covers the sensor band (3).

2. Plastic pipe for transporting media according to claim 1, **characterized in that** the barrier layer (2) comprises a metallic foil, preferably wound around the longitudinal axis of the innermost layer (1), or a layer of a plastic with high resistance to diffusion of gaseous media.

3. Plastic pipe for transporting media according to claim 2, **characterized in that** the barrier layer (2) is a layer comprising aluminum or stainless steel and preferably comprises an aluminum foil or stainless steel foil.

4. Plastic pipe for transporting media according to one of claims 1 to 3, **characterized in that** the barrier layer (2) comprises or is a permeation barrier layer.

5. Plastic pipe for transporting media according to one of claims 1 to 4, **characterized in that** the innermost layer (1) comprises a polyolefin, in particular a polyethylene or polypropylene, or a polyamide.

6. Plastic pipe according to one of claims 1 to 5, **characterized in that** the sensor band (3) comprises a textile carrier material (7), on which or in which the at least one measuring line (4) is arranged.

7. Plastic pipe according to claim 6, **characterized in that** the textile carrier material (7) comprises a woven fabric, a knitted fabric or a fleece, preferably made of plastic fibers.

8. Plastic pipe according to one of claims 6 to 7, **characterized in that** the textile carrier material (7) of the sensor band comprises a stretchable elastic material.

9. Plastic pipe according to one of claims 1 to 8, **characterized in that** the sensor band (3) comprises at least two, preferably at least three electrically conductive wires (4), which extend in a wave-like, zigzag or meandering manner in the longitudinal direction of the sensor band (3).

10. Plastic pipe according to one of claims 1 to 9, **characterized in that** the measuring line or the electrically conductive wires (4) each comprise a conductor made of a Cu-, Al- or NiCr-based alloy, which is in each case preferably electrically insulated by a coating, a thin plastic sheathing or a lacquer.

11. Plastic pipe according to claim 9 or 10, **characterized in that** two or more electrically conductive wires (4) are provided, which consist of different alloys with respectively different electrical resistances.

12. Plastic pipe according to one of claims 9 to 11, **characterized in that** at least one of several wires (4) of a sensor band (3) is designed without an electrically insulating coating.

13. Plastic pipe according to one of claims 1 to 12, **characterized in that** the sensor band (3) comprises at least one optical waveguide (8), in particular a fiber optic cable, wherein the optical waveguide (8) is preferably provided in a sensor band (3) in addition to at least two, particularly preferably in addition to at least three electrically conductive wires (4).

14. Plastic pipe according to one of claims 1 to 13, **characterized in that** the outer protective layer (5) comprises a polyolefin, in particular a polyethylene or polypropylene, or a polyamide.

15. Plastic pipe according to one of claims 1 to 14, **characterized in that** the outer protective layer (5) has a layer thickness of at least about 2 mm, in particular of at least about 2.5 mm.

16. Method for installing a pipeline, comprising: at least two pipe sections of a plastic pipe (6) with the features of one or more of claims 1 to 15 to be connected to each other, wherein the respective ends of the two pipe sections to be connected are arranged end-to-end and are then either welded directly to each other or a connection is established between the pipe sections to be connected via a further connecting element, in particular via a pipe socket, fitting,
**characterized in that**
either the welded seam or alternatively the pipe socket is electrically bridged, wherein the sensor band (3) integrated in each of the pipe sections to be connected is guided over the connection point and the measuring line (4), in particular electrically conductive wires (4), are connected to each other in an electrically continuous manner and, if applicable, the optical waveguide(s) (8) are also connected to each other in an optically continuous manner.

17. Method according to claim 16, **characterized in that** the respective ends of the stretchable sensor bands (3) of the pipe sections are guided over the connection point on both sides of the connection point by applying a tensile force, and thereafter the electrically conductive wires (4) and, if applicable, also the optical waveguide fibers (8) are connected to each other securely and in a moisture-tight manner by means of suitable connecting elements, in particular by means of plug connectors or the like.

18. Method according to one of claims 16 or 17, **characterized in that** the connection area of the interconnected pipe sections of the pipeline is sealed by suitable post-jacketing elements, in particular by means of shrink sleeves, cold welding tapes or the like.

19. Method for producing a plastic molded part, in particular a pipe bend, comprising at least the following steps:
- Providing a plastic pipe with the features of one of claims 1 to 15,
- Cutting the plastic pipe to an axial length provided for the molded part, in particular the pipe bend,
- Deforming the cut-to-length plastic pipe into a molded part, in particular bending the cut-to-length plastic pipe into a pipe bend with a provided bending radius.

20. Plastic molded part, produced by a method according to claim 19.

## Revendications

1. Tube en matière plastique pour le transport de fluides sous pression interne avec système de capteurs intégré pour la surveillance fonctionnelle et la détection de dommages, comprenant : au moins une couche radialement la plus interne (1) extrudée, résistante à la pression, en une matière plastique thermoplastique, au moins une couche barrière (2) se raccordant radialement vers l'extérieur à ladite au moins une couche la plus interne (1), au moins une ligne de mesure (4) intégrée dans le tube en matière plastique et s'étendant le long du tube en matière plastique, et au moins une couche de protection externe (5) en une matière plastique thermoplastique, entourant la ligne de mesure (4) et les autres couches (1, 2),
**caractérisé en ce que**
le tube en matière plastique comprend en outre au moins une bande de capteur (3), ladite au moins une ligne de mesure (4) faisant partie de cette bande de capteur (3), la bande de capteur (3) étant disposée enroulée en spirale autour d'un axe longitudinal des couches internes (1, 2) du tube en matière plastique et la couche de protection externe (5) recouvre la bande de capteur (3).

2. Tube en matière plastique pour le transport de fluides selon la revendication 1, **caractérisé en ce que** la couche barrière (2) comprend une feuille métallique, de préférence enroulée autour de l'axe longitudinal de la couche la plus interne (1), ou une couche en une matière plastique à haute résistance à la diffusion de fluides gazeux.

3. Tube en matière plastique pour le transport de fluides selon la revendication 2, **caractérisé en ce que** la couche barrière (2) est une couche comprenant de l'aluminium ou de l'acier inoxydable et comprend de préférence une feuille d'aluminium ou une feuille d'acier inoxydable.

4. Tube en matière plastique pour le transport de fluides selon l'une des revendications 1 à 3, **caractérisé en ce que** la couche barrière (2) comprend ou est une couche anti-perméation.

5. Tube en matière plastique pour le transport de fluides selon l'une des revendications 1 à 4, **caractérisé en ce que** la couche la plus interne (1) comprend une polyoléfine, en particulier un polyéthylène ou un polypropylène, ou un polyamide.

6. Tube en matière plastique selon l'une des revendications 1 à 5, **caractérisé en ce que** la bande de capteur (3) comprend un matériau de support textile (7) sur lequel ou dans lequel est disposée ladite au moins une ligne de mesure (4).

7. Tube en matière plastique selon la revendication 6, **caractérisé en ce que** le matériau de support textile (7) comprend un tissu, un tricot ou un non-tissé, de préférence en fibres de matière plastique.

8. Tube en matière plastique selon l'une des revendications 6 à 7, **caractérisé en ce que** le matériau de support textile (7) de la bande de capteur comprend un matériau élastique extensible.

9. Tube en matière plastique selon l'une des revendications 1 à 8, **caractérisé en ce que** la bande de capteur (3) comprend au moins deux, de préférence au moins trois torons électriquement conducteurs (4) qui s'étendent de manière ondulée, en zigzag ou en méandre dans la direction longitudinale de la bande de capteur (3).

10. Tube en matière plastique selon l'une des revendications 1 à 9, **caractérisé en ce que** la ligne de mesure ou les torons électriquement conducteurs (4) comprennent chacun un conducteur en un alliage à base de Cu, d'Al ou de NiCr, lequel est de préférence isolé électriquement par un revêtement, une fine gaine en matière plastique ou un vernis.

11. Tube en matière plastique selon la revendication 9 ou 10, **caractérisé en ce que** deux ou plusieurs torons électriquement conducteurs (4) sont prévus, qui sont constitués de différents alliages ayant des résistances électriques respectives différentes.

12. Tube en matière plastique selon l'une des revendications 9 à 11, **caractérisé en ce que** au moins un des plusieurs torons (4) d'une bande de capteur (3) est réalisé sans revêtement d'isolation électrique.

13. Tube en matière plastique selon l'une des revendications 1 à 12, **caractérisé en ce que** la bande de capteur (3) comprend au moins un guide d'ondes lumineuses (8), en particulier un câble à fibres optiques, le guide d'ondes lumineuses (8) étant de préférence prévu en plus d'au moins deux, de manière particulièrement préférée en plus d'au moins trois torons électriquement conducteurs (4) dans une bande de capteur (3).

14. Tube en matière plastique selon l'une des revendications 1 à 13, **caractérisé en ce que** la couche de protection externe (5) comprend une polyoléfine, en particulier un polyéthylène ou un polypropylène, ou un polyamide.

15. Tube en matière plastique selon l'une des revendications 1 à 14, **caractérisé en ce que** la couche de protection externe (5) présente une épaisseur de couche d'au moins environ 2 mm, en particulier d'au moins environ 2,5 mm.

16. Procédé d'installation d'une canalisation, comprenant : au moins deux sections de tube en matière plastique (6) à raccorder l'une à l'autre, présentant les caractéristiques de l'une ou de plusieurs des revendications 1 à 15, dans lequel les extrémités respectives des deux sections de tube à raccorder sont disposées bout à bout et sont ensuite soit soudées directement l'une à l'autre, soit un raccordement est établi entre les sections de tube à raccorder via un autre élément de raccordement, en particulier via un manchon de tube, raccord,
**caractérisé en ce que**
soit le cordon de soudure, soit alternativement le manchon de tube est ponté électriquement, la bande de capteur (3) respectivement intégrée dans les sections de tube à raccorder l'une à l'autre étant guidée au-delà de la zone de raccordement et la ligne de mesure (4), en particulier les torons électriquement conducteurs (4), sont raccordés l'un à l'autre de manière électriquement continue et, le cas échéant, le ou les guides d'ondes lumineuses (8) sont également raccordés l'un à l'autre de manière optiquement continue.

17. Procédé selon la revendication 16, **caractérisé en ce que** les extrémités respectives des bandes de capteur extensibles (3) des sections de tube sont guidées au-delà de la zone de raccordement de part et d'autre de celle-ci par application d'une force de traction, et ensuite les torons électriquement conducteurs (4) et, le cas échéant, également les fibres de guides d'ondes lumineuses (8) sont raccordés l'un à l'autre de manière sûre et étanche à l'humidité au moyen d'éléments de raccordement appropriés, en particulier au moyen de connecteurs enfichables ou similaires.

18. Procédé selon l'une des revendications 16 ou 17, **caractérisé en ce que** la zone de raccordement des sections de tube raccordées l'une à l'autre de la canalisation est scellée par des éléments de post-enrobage appropriés, en particulier au moyen de manchons thermorétractables, de bandes de soudage à froid ou similaires.

19. Procédé de fabrication d'une pièce moulée en matière plastique, en particulier d'un coude de tube, comprenant au moins les étapes suivantes:
- fourniture d'un tube en matière plastique présentant les caractéristiques de l'une des revendications 1 à 15,
- découpe du tube en matière plastique à une longueur axiale prévue pour la pièce moulée, en particulier le coude de tube,
- déformation du tube en matière plastique découpé pour former une pièce moulée, en particulier pliage du tube en matière plastique découpé pour former un coude de tube avec un rayon de courbure prévu.

20. Pièce moulée en matière plastique, fabriquée selon un procédé conforme à la revendication 19.
